# EUROPÄISCHE PATENTANMELDUNG

(11) **EP 0 623 380 A1**
(43) Veröffentlichungstag der Anmeldung: **09.11.1994**
(21) Anmeldenummer: 93107429.8
(22) Anmeldetag: 07.05.1993
(51) Int. Cl.: B01D 69/14, B01D 61/14, B01D 17/02, B01D 71/02

(54) **Membran zur Trennung von Polydispersionen und/oder Emulsionen sowie Verfahren zur Herstellung der Membran**

(71) Anmelder: Iniotakis, Nicolaos, D-52428 Jülich (DE); Keutmann, Willi, W-5142 Hückelhoven (DE); von der Decken, Klaus-Benedict, Prof., D-52064 Aachen (DE)
(72) Erfinder: Iniotakis, Nicolaos, D-52428 Jülich (DE); Keutmann, Willi, W-5142 Hückelhoven (DE); von der Decken, Klaus-Benedict, Prof., D-52064 Aachen (DE)

(57) **Zusammenfassung**

Zur Trennung von Polydispersionen in ihre kontinuierliche und dispergierte Phase sowie von Emulsionen in ihre Bestandteile wird eine Membran vorgeschlagen, die bei ausreichender Permeabilität eine hohe mechanische Festigkeit und Stabilität aufweist und deren Permeabilität der jeweils zu trennenden Dispersion und/oder Emulsion in einfacher Weise anpaßbar ist. Die Membran besteht im wesentlichen aus einem porösen Stützgerüst als Tragkörper für eine Membranschicht aus gebundenem pulverförmigem Material. Dabei sind Pulverkörner und Binder für die Ausbildung der Schicht von solcher Beschaffenheit, daß die Schicht Durchlaßöffnungen aufweist. Durch diese kann die kontinuierliche Phase passieren, wogegen die dispergierte und/oder emulgierte Phase im wesentlichen zurückgehalten wird.

## Beschreibung

Die Erfindung betrifft eine Membran zur Trennung von Polydispersionen und/oder Emulsionen in ihre kontinuierliche und dispergierte und/oder emulgierte Phase.

Membranfilter zur Abscheidung grob disperser, kolloidaler bis molekulardisperser Teilchen aus Flüssigkeiten sind bekannt. Die jeweilige Durchlässigkeit der Membran, ihre Permeabilität, wird bestimmt von der gegebenen Abmessung und der Anzahl der Poren in der Membran, die die jeweils kontinuierliche Phase durchdringt. Membranfilter eigenen sich zur Konzentration, Fraktionierung oder Reinigung insbesondere auch bei makromolekularen Lösungen. Für solche Ultrafiltrationen werden vorwiegend Membranen aus Cellulose und ihren Derivaten oder aus synthetischen Polymeren eingesetzt. Zwecks Stabilisierung der dünnen Membranhäute werden diese auf porösen Trägerkörpern fixiert.

Die bisher bekannten Membranen weisen bei hoher Trennwirkung meist nur eine geringe Permeabilität auf. Sie verblocken leicht und müssen mit hohen Strömungsgeschwindigkeiten an den Membranoberflächen freigespült werden. Die Flüssigkeitsvolumina, die hierzu umgewälzt werden müssen, können das 50- bis 100fache des Permeatflusses betragen. Nachteilig ist auch die Empfindlichkeit der Membranen gegen mechanische Einwirkungen und ihre den organischen Werkstoffen entsprechende niedrige Temperaturbeständigkeit.

Diese Nachteile der bekannten Membranfilter engen ihren Anwendungsbereich ein, sie komplizieren die Prozeßführung und führen zu erhöhten Investitions- und Betriebskosten. Die Aufarbeitung von z.B. Silikonöl/Wasser-Emulsionen oder die Ultrafiltration von Olivenöl/Wasser-Emulsionen sind mit Membranfiltern bekannter Art zu kostenintensiv; vor allem läßt sich das Verblocken der Membranen nicht mit vertretbarem Aufwand kontrollieren.

Aufgabe der Erfindung ist es, eine Membran zur Trennung von Emulsionen und/oder Dispersionen zu schaffen, die bei ausreichender Permeabilität eine hohe mechanische Festigkeit und Stabilität aufweist und deren Permeabilität der jeweils zu trennenden Dispersion und/oder Emulsion in einfacher Weise anpaßbar ist.

Diese Aufgabe wird bei einer Membran der eingangs genannten Art durch die in Patentanspruch 1 angegebenen Merkmale gelöst. Danach ist als Membran auf einem porösen Stützgerüst als Trägerkörper eine Schicht aus gebundenem pulverförmigem Material aufgebracht, wobei Pulverkörnung und Binder für die Ausbildung der Schicht derart bestimmt sind, daß die Schicht Durchlaßöffnungen aufweist, durch die die kontinuierliche Phase passieren kann, die gegebene dispergierte bzw. emulgierte Phase jedoch im wesentlichen zurückgehalten wird. Die optimale Pulverkörnung und der zugehörige Binder lassen sich entsprechend der zu trennenden Emulsion bzw. Dispersion empirisch ermitteln. Je feiner das zur Ausbildung der Schicht benutzte Pulvermaterial ist, um so höher ist die erreichte Filterwirkung. Für die Auswahl der Pulverkörnung sind jeweils beide Pulvercharakteristika - der mittlere Pulverkorndurchmesser und die Kennliniencharakteristik (nach DIN 4190) - maßgebend, wobei die sich einstellende Permeabilität der Membranschicht mit der Kennliniencharakteristik korreliert. Als Pulvermaterialien sind metallische und keramische Pulver, aber auch Kunststoffpulver geeignet. Um eine hohe Temperaturbeständigkeit der Membranschicht zu erreichen, werden metallische oder keramische Pulvermaterialien bevorzugt. Jedoch ist für erhöhte Betriebstemperatur auch temperaturbeständiger Kunststoff, wie z.B. gemahlenes Teflon, einsetzbar.

Für die Trennung der Emulsion bzw. Dispersion ist es vorteilhaft, die Membranaffinität für die kontinuierliche Phase zu verstärken, also die Membranschicht z.B. bei Öl-in-Wasser-Emulsionen zu hydrophilieren, bei Wasser-in-Öl-Emulsionen dagegen hydrophob, also wasserabstoßend, auszubilden. Neben dem Pulvermaterial ist für die Affinität der Membranschicht auch das eingestellte Mengenverhältnis zwischen Pulvermaterial und Binder entscheidend. Für hyrophile, wasserdurchlässige Membranen haben sich keramische Pulverwerkstoffe, wie Al₂O₃, Cr₂O₃, ZrO₂ und auch Graphit, als geeignet erwiesen; hydrophile Eigenschaften werden bei einem Keramikpulveranteil von mindestens 55 Gew.-% (Rest ist Binderanteil) erreicht. Durch Einstellung der Membran auf Affinität zur jeweils die Membranschicht durchdringenden kontinuierlichen flüssigen Phase wird die Membranpermeabilität erhöht und eine Blockade der Membran weitgehend verhindert. Beeinflussen läßt sich die Durchlässigkeit der Membran und ihre hydrophile oder hydrophobe Eigenschaft auch durch Pigmentierung der permeablen Membranschicht. So wirken z.B. Pigmente, wie auf der Basis von SiO₂ hergestellte Pulver, z.B. Aerosil 200®, hydrophilierend, während z.B. Aerosil 972® und/oder metallische Pulver als Pigmente die Schicht hydrophob einstellen.

Als poröses Stützgerüst für die Membranschicht wird zweckmäßig ein Metallvlies oder Metallgewebe oder Glasfasergewebe zwischen 5 - 60 µm eingesetzt.

Zur Herstellung der Membran wird nach Patentanspruch 7 eine auf einem porösen Stützgerüst haftende Masse, bestehend aus einem körnigen Pulver, einem die Pulverkörner bindenden Bindemittel (Binder) und einem Lösungsmittel für den Binder, hergestellt, die auf das Stützgerüst aufgetragen wird. Die Masse wird unter Austreiben des Lösungsmittels auf dem Stützgerüst getrocknet und verfestigt. Dabei sind die Pulverkörnung des zur Herstellung der Masse verwendeten Pulvers und der Binder derart gewählt, daß die auf dem Stützgerüst nach Trocknung und Verfestigung der Masse gebildete Membranschicht Durchlaßöffnungen aufweist, die unter Zurückhaltung der dispergierten bzw. emulgierten Phase ein Passieren der kontinuierlichen Phase ermöglichen. Bevorzugt werden keramische (Oxide, Karbide, Graphit) und/oder metallische Pulvermaterialien mit Korngrößen ≦ 15 µm eingesetzt. Als Binder werden organische Binder (Harze) und entsprechende Lösungsmittel für den Binder in Mischungsverhältnissen benutzt, die zu einer für das Auftragen der Masse auf dem Stützgerüst, z.B. durch Spritzen oder Walzen, geeigneten Viskosität der Masse führen.

Um die Homogenität der Membranschicht zu verbessern, wird nach Patentansprüchen 10 und 11 die Masse in mehreren Schichten aufgetragen, wobei nach jedem Auftragen ein Trocknen und Ausheizen der Membranschicht erfolgt. Nach Aufbringen der letzten der Schichten wird die gesamte Membranschicht auf dem Stützgerüst bei ca. 400°C gesintert. Neben dem ausgewählten, jeweils verwendeten Pulvermaterial und dessen Pulverkörnung und dem gewählten Mischungsverhältnis zwischen Pulvermaterial und Binder bestimmt auch die Stärke der Membranschicht die Permeabilität und die molekulare Trenngrenze der Membran. Damit die Membran eine ausreichende Festigkeit und Stabilität, aber auch eine genügende Duktilität aufweist, ist es zweckmäßig, mindestens 30 Gewichtsanteile Binder auf 70 Gewichtsanteile Pulvermasse zu geben.

Zur Ausbildung hydrophiler Membranschichten werden keramische Pulvermaterialien, wie Al₂O₃, Cr₂O₃, ZrO₂ und Graphit, mit einem Massenanteil von mehr als 55 Gew.-% im Pulvermaterial/Binder-Gemisch bevorzugt. Bei einem Massenanteil zwischen 50 und 55 Gew.-% Keramikpulver ergibt sich eine Membranschicht, die hinsichtlich ihrer Hydroaffinität Inhomogenitäten aufweist. Membranschichten dieser Art sind amphoter, d.h. sie verhalten sich sowohl hydrophil als auch hydrophob.

Von besonderer Bedeutung ist die Anwendung der Membran bei der Reinigung von Abwasser, das bei der Produktion von Olivenöl anfällt. Bei der Herstellung von Olivenöl entstehen toxisch wirkende Abwasser, die mit biotechnologischen Verfahren nur schwierig entsorgbar sind. Neben den toxischen Stoffen, wie Phenolen oder Tanninen, sind im Abwasser aber auch wiederverwertbare Stoffe enthalten, etwa ca. 2 - 5 Gew.-% Zucker, ca. 7 Gew.-% gelöste Salze, 0,3 - 0,5 Gew.-% organische Farbstoffe und 0,3 - 3 Gew.-% restliches Olivenöl, letzteres in emulgierter Form. Zur Abtrennung und Gewinnung des emulgierten Olivenöls wird in vorteilhafter Weise eine hydrophile Membranschicht eingesetzt, die aus einer keramisches Pulver (Al₂O₃) und organischen Binder (Polyethersulfone) enthaltenden Masse mit 55 - 60 Gew.-% keramischem Pulver mit Pulverkörnern ≦ 15 µm gefertigt ist, wobei zur Einstellung der Viskosität zum Auftragen der Masse auf ein Stützgerüst aus rostfreiem Stahl mit einer Maschenweite von 5 - 60 µm ein organisches Lösungsmittel (beispielsweise ein aromatischer Kohlenwasserstoff oder N-Methyl-Pyrrolidon) verwendet wird.

Von wesentlicher Bedeutung ist es, daß eine derartige Membran auf die Öl-in-Wasser-Emulsion zugleich demulgierend wirkt, d.h. daß sowohl das die Membran durchsetzende Permeat, vor allem aber das zurückbleibende Retentat nach Ablauf von der Membran im wesentlichen demulgiertes Öl enthält, das sich in einfacher Weise vom Wasser trennen läßt.

Eine Vorrichtung zur Gewinnung restlichen Olivenöls aus Abwasser, das bei der Olivenölproduktion entsteht, geht von einem im Abwasserablauf angeordneten Filtersystem aus, dessen im Filtersystem angeordnetem Filterkörper das Abwasser primärseitig zuläuft. Von der Sekundärseite des Filterkörpers wird entöltes Wasser abgezogen. Gemäß der Erfindung wird als Filterkörper eine auf einem Stützgerüst aufgebrachte Membranschicht aus gebundenem pulverförmigem Material verwendet, wobei zur Ausbildung der Membranschicht Pulverkörner und Binder derart gewählt sind, daß in der Schicht Durchlaßöffnungen für die wäßrige Phase entstehen und das emulgierte Olivenöl zurückgehalten wird. Der Ablauf des weitgehend entölten Abwassers von der Primärseite der Membranschicht mündet in einen Ölabscheider, in dem sich auf der Flüssigkeitsoberfläche restliches Olivenöl absetzt und von dort entnommen wird. Nach Patentanspruch 22 ist es zweckmäßig, mehrere Filterkörper parallelzuschalten, wobei von allen Filterkörpern die Abläufe für das Permeat von den jeweiligen Sekundärseiten der Membranschichten zusammengeführt sind.

Um ggf. Olivenölanteile, die zusammen mit der permeierten flüssigen Phase durch die Membranschicht gelangen, noch vor Ablauf des Permeats aus dem Filtersystem abzufangen, mündet der oder münden die an der Sekundärseite der Membranschicht angeschlossenen Permeatleitungen in einen weiteren Ölabscheider, in dem sich das restliche Olivenöl an der Permeatoberfläche absetzt. Aus dem nun verbliebenen ölfreien Restwasser können ggf. noch enthaltene toxische Stoffe entfernt und Nutzstoffe gewonnen werden, ehe das dann erhaltene Reinwasser in die Umgebung abgeführt wird.

Die Erfindung und weitere Erfindungsmerkmale werden nachfolgend anhand von Ausführungsbeispielen näher erläutert. In der Zeichnung ist anhand eines Fließbildes schematisch eine Anlage zur Olivenölabwasserreinigung dargestellt.

### Ausführungsbeispiel 1

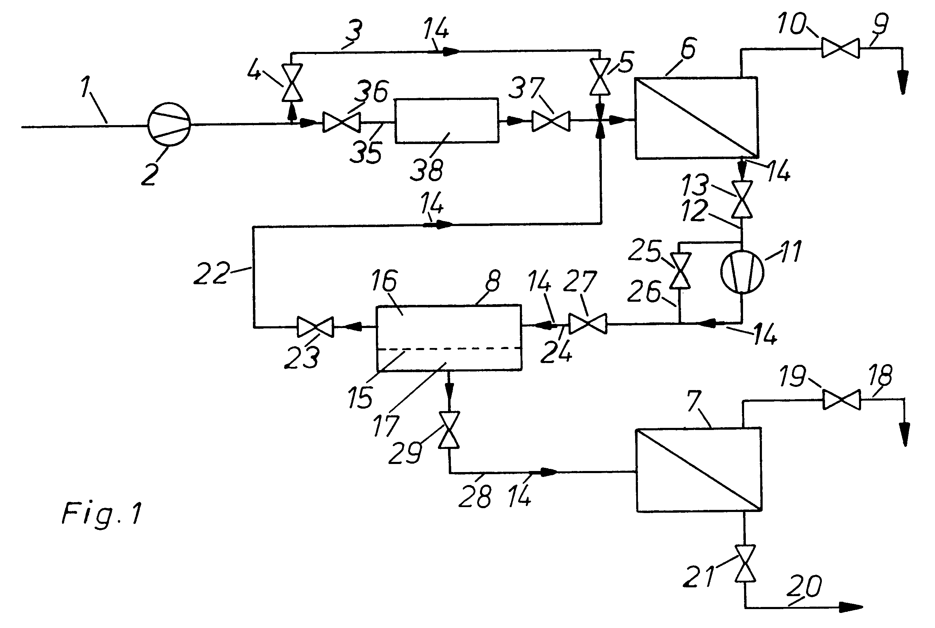

In der Zeichnung ist in Fig. 1 als Ausführungsbeispiel eines Filtersystems eine Filteranlage zur Reinigung von Abwasser wiedergegeben, das bei der Olivenölproduktion anfällt. Das Abwasser enthält restliches Olivenöl in dispergierter und emulgierter Form, wobei es sich um eine Öl-in-Wasser-Emulsion handelt. In der Emulsion sind etwa 0,3 - 3 Gew.-% Olivenöl emulgiert, das in der Filteranlage gewonnen werden soll.

Hierzu wird ein von der Olivenölproduktionseinrichtung kommender Abwasserablauf 1, ggf. nach Vorschaltung eines in der Zeichnung nicht wiedergegebenen Zwischenlagerbeckens für das Abwasser, mit der Saugseite einer Abwasserpumpe 2 verbunden. Von der Abwasserpumpe 2 wird die Öl-in-Wasser-Emulsion über eine Zuleitung 3, in die Absperrhähne 4 und 5 eingesetzt sind, zum Filtersystem geführt, das im Ausführungsbeispiel zwei Absatzkammern 6 und 7 für die Abscheidung dispergierten Olivenöls und eine Filterkammer 8 aufweist.

Das sich in der Absetzkammer 6 absetzende Olivenöl wird über eine Ölleitung 9 nach Öffnen eines Absperrhahns 10 abgeleitet, die restliche Öl-in-Wasser-Emulsion wird aus der Absetzkammer 6 mittels einer Förderpumpe 11 abgeführt, die sich in einem Verbindungskanal 12 zwischen Absetzkammer 6 und Filterkammer 8 befindet. Im Verbindungskanal 12 ist ein absperrbarer Ablaufhahn 13 eingesetzt.

Die Absetzkammer 6 und die Filterkammer 8 sind, in Strömungsrichtung der Öl-in-Wasser-Emulsion gesehen, Strömungsrichtungspfeile 14, hintereinandergeschaltet. Die Filterkammer 8 ist mit einer hydrophilen Membran 15 als Filterkörper ausgestattet. Auf der Primärseite der Membran fließt in eine Primärkammer 16 der Filterkammer 8 die Öl-in-Wasser-Emulsion ein, von der Sekundärseite der Membran 15 ist aus einer Sekundärkammer 17 der Filterkammer 8 als Permeat weitgehend ölfreies Wasser entnehmbar. Im Permeat noch enthaltenes Öl wird schließlich in der Absetzkammer 7 gewonnen und über eine an der Absetzkammer 7 angeschlossene Ölleitung 18 mit Absperrhahn 19 abgezogen. Das von Olivenöl freie Wasser fließt über die Reinwasserleitung 20 nach Öffnen eines Ablaufhahns 21 in die Umgebung ab.

Das in der Primärkammer 16 der Filterkammer 8 verbleibende, mit demulgiertem Olivenöl angereicherte Retentat wird über eine Rückführleitung 22 zur Absetzkammer 6 zurückgeführt. Der Retentatstrom in der Rückführleitung 22 wird durch ein in der Rückführleitung 22 eingesetztes Regelventil 23 gesteuert. Durch Einstellen des Retentatstroms wird auch die im Zulauf 24 der Filterkammer 8 strömende Öl-in-Wasser-Emulsionsmenge geregelt. Hierzu dient auch ein Regelventil 25 in einem Rücklaufbypass 26, der zur Rückführung von von der Förderpumpe 11 überschüssig geförderter Öl-in-Wasser-Emulsion Druck- und Ansaugseite der Förderpumpe verbindet.

Im Verbindungskanal 12 am Zulauf 24 ist ein Absperrhahn 27 angeordnet. Auch im Permeatablauf in einer Permeatleitung 28 befindet sich ein Absperrventil 29. Die Regelventile 23, 25 werden jeweils so eingestellt, daß sich zwischen Zulauf der Öl-in-Wasser-Emulsion und Permeat- bzw. Retentatstrom ein der gewünschten Filterung angepaßtes Mengenverhältnis einstellt. Der Permeatstrom wird zur Abscheidung des in ihm noch enthaltenen Olivenöls über die Permeatleitung 28 zur Absetzkammer 7 geführt.

Die Absetzkammern 6, 7 sind derart ausgebildet, daß sich im Wasser jeweils demulgiertes Olivenöl auf der Oberfläche des sich in der Absetzkammer sammelnden Wassers absetzen kann. Das Öl fließt aus den Absetzkammern im einfachsten Falle über Überläufe ab, es kann selbstverständlich auch von der Wasseroberfläche aus der Absetzkammer abgesaugt werden. Das vom demulgierten Öl befreite Wasser wird vom Boden der Absetzkammern abgeführt, dabei fließt aus der Absetzkammer 6 über den Verbindungskanal 12 eine noch Olivenöl enthaltende Öl-in-Wasser-Emulsion ab, während sich aus der Absetzkammer 7 über die Reinwasserleitung 20 ölfreies Wasser entnehmen läßt.

Im Ausführungsbeispiel wird in der in Figur 1 der Zeichnung wiedergegebenen Reinigungsanlage Abwasser aus der Produktionsstätte für Olivenöl gereinigt. Das Abwasser enthält ca. 0,6 Gew% Olivenöl. Es wurde ein Abwasservolumen (m³/h) von v̊₁ = 1,2 m³/h mit einem Ölgehalt m̊₁ (kg/h) von m̊₁ ≈ 7 kg/h entölt. In der Zeichnung sind der Abwasserstrom sowie die Ströme von Retentat, Permeat und Reinwasser jeweils an den Förderleitungen n für die Volumenströme v̊ₙ in m³/h angegeben. Der vorgenannte Abwasserstrom v̊₁ = 1,2 m³/h fließt nach Inbetriebnahme der Abwasserpumpe 2 und Öffnen der Absperrhähne 4, 5 über die Zuleitung 3 zur Absetzkammer 6.

In der Absetzkammer 6 wird demulgiertes Olivenöl abgeführt, die übrige Öl-in-Wasser-Emulsion wird zur Filterkammer 8 gepumpt. Zusammen mit dem rückgeführten Retentat mit einem Volumenstrom von v̊₂₂ = 2,8 m³/h fließt der Absetzkammer 6 somit ein Volumenstrom von v̇₆ = 4 m³/h zu. In der Absetzkammer 6 wird Olivenöl in einer Menge m̊₉ von m̊₉ = 0,97 x m₁ gewonnen, und der Öl-in-Wasser-Emulsionsstrom von v̊₁₂ = 4 m³/h (die gewonnene Ölmenge verringert den Volumenstrom nur geringfügig) wird zur weiteren Trennung von Olivenöl und Wasser in die Filterkammer 8 gefördert.

Die in der Filterkammer 8 eingesetzte hydrophile Membran 15 wirkt in der Filterkammer 8 in zweifacher Weise: Zum einen dient sie der Mikrofiltration, wobei auf der Sekundärseite der Membran weitgehend von Öl befreites Wasser gewonnen wird, zum anderen wird die Öl-in-Wasser-Emulsion demulgiert, und es findet eine Entmischung der beiden Flüssigkeitsphasen Olivenöl und Wasser statt. Diese Entmischung wird nicht nur im Permeat erreicht, so daß sich im Permeat noch vorhandenes Olivenöl in einfacher Weise im Abscheider 7 abtrennen läßt, entmischt wird vielmehr auch das Retentat. In der Rückführleitung 22 fließt somit ein demulgiertes Öl/Wasser-Gemisch, das in der Absetzkammer 6 getrennt werden kann.

Die Ölmenge, die in der Filterkammer 8 mit dem Wasser durch die hydrophile Membran 15 mitpermeiert, hängt vom Rückhaltevermögen der Membran (Retentionsfaktor) und vom Mengenverhältnis ϑ zwischen Permeatstrom v̊₂₈ zum Zulaufstrom v̊₂₄ zur Filterkammer 8 ab, ϑ = v̊₂₈/v̊₂₄ Aus der Filterkammer 6 wird über die Permeatleitung 28 ein Wasserstrom von v̊₂₈ = 1,2 m³/h abgezogen, das Verhältnis ϑ ist somit mit v̊₂₄ = v̊₁₂ = 4 m³/h auf ϑ = 0,3 eingestellt. Der Retentatstrom, der zur Absetzkammer 6 zurückgeführt wird, beträgt - wie oben bereits angegeben - v̊₂₂ = 2,8 m³/h.

Aus dem zur Absetzkammer 7 fließenden Permeat wird im Ausführungsbeispiel noch eine Olivenölmenge m̊₁₈ von ṁ₁₈ = 0,03 x m̊₁ gewonnen, an ölfreiem Wasser laufen in die Umgebung v̇₂₀ = 1,2 m³/h ab.

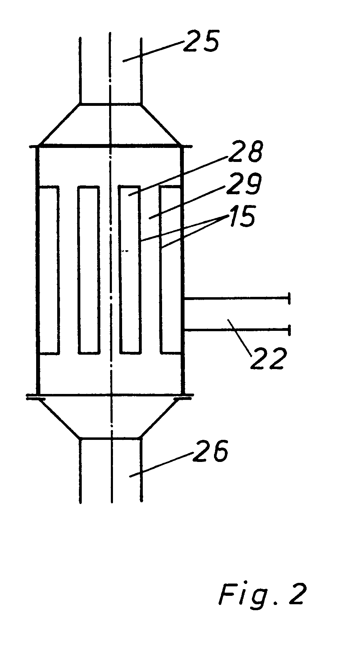

Die Filterkammer 8 weist im Ausführungsbeispiel, wie in Figur 2 gezeigt ist, mehrere plattenförmige Membranen 15 auf, die parallel zueinander verlaufen und zwischen sich Strömungskanäle 30, 31 bilden. Jeweils abwechselnd dient einer der Strömungskanäle als Strömungskanal zur Ausbildung der Primärkammer 16 der Filterkammer 8, diese Strömungskanäle werden deshalb als Primärkanäle 30 bezeichnet, während die jeweils benachbarten, durch eine der Membranen 15 von den Primärkanälen 30 getrennten Strömungskanäle die Sekundärkammer 17 bilden und deshalb Sekundärkanäle 31 genannt werden. Im Ausführungsbeispiel weisen die Primär- und Sekundärkanäle 30, 31 die folgenden Abmessungen auf: Strömungsquerschnitt 4 x 270 mm², Kanallänge 620 mm. Die insgesamt wirksame Membranfläche in der Filterkammer 8 beträgt 1,4 m².

In den Primärkanälen 30 sind Kusntstoffnetze 32 zur Erhöhung der Turbulenz der Strömung in den Primärkanälen 30 eingesetzt, in den Sekundärkanälen 31 befinden sich zur Abstützung der Membranen poröse Stützkörper 33. Im Ausführungsbeispiel ist der Zulauf 24 zur Filterkammer 8 bei senkrecht stehender Filterkammer von unten an der Filterkammer angeschlossen, das Retentat fließt über die Rückführleitung 22 ab. Die Permeatleitung 28 ist seitlich an der Filterkammer 8 angeschlossen. Das Permeat tritt aus den Sekundärkanalen 31 über Öffnungen 34 in die Permeatleitung 28 ein.

In den Primärkanälen 28 wurden Strömungsgeschwindigkeiten am Eintritt zwischen v = 15,4 und 23,1 cm/s, an ihrem Austritt v = 7,7 bis 18 cm/s eingestellt. Die Druckdifferenz zwischen Primär-und Sekundärseite der Membran 18 in der Filterkammer 8 lag bei ca. 0,5 - 0,7 bar. Eine Verblockung der in der Filterkammer eingesetzten hydrophilen Membran wurde auch nach einer Betriebszeit von 700 h zur Entölung von Olivenöl enthaltendem Abwasser nicht festgestellt.

Neben einem Mengenverhältnis ϑ zwischen Permeatstrom und Zulauf der Öl-in-Wasser-Emulsion von ϑ = 0,3 wurde das Filtersystem auch bei einem Verhältnis ϑ = 0,5 betrieben. Die sich bei beiden ϑ-Werten einstellenden Verhältnisse sind in der nachfolgenden Tabelle angegeben:

| ϑ | v̇₁ m³/h | v̇₂₄ m³/h | ṁ₉/ṁ₁ | ṁ₁₈/ṁ₁ | ṁ₁ [kg/h] |
|---|---|---|---|---|---|
| 0,3 | 1,2 | 4,00 | 0,97 | 0,03 | 7 |
| 0,5 | 1,2 | 2,4 | 0,95 | 0,05 | 7 |

### Ausführungsbeispiel 2

Die in Figur 1 gezeigte Anlage läßt sich auch zur Entsorgung von Bilgenwasser einsetzen, das bei der Schiffahrt als ölhaltiges Abwasser entsteht und auch als sloop bezeichnet wird. Die Entsorgung solcher Abwasser ist sehr problematisch. Auch beim Transport von Rohöl entstehen bei der Entladung der Öltanks ölhaltige Abwässer durch Spülen der Tankwände mit Druckwasser. Besonders schwierig sind derartige ölhaltige Emulsionen aufzuarbeiten, wenn sie Salzwasser enthalten.

Das in Figur 1 wiedergegebene Filtersystem wurde für die Entsorgung von Bilgenwasser mit einem Ölgehalt von 2 % eingesetzt. Es wurden ca. 20 m³ derartiger Abwasser verarbeitet. Die Betriebszeit zur Verarbeitung dieser Abwassermenge betrug ca. 17 h. An der Filterkammer war ein Mengenverhältnis von Permeat- zum Zulaufstrom von ϑ = 0,3 eingestellt. In der Absetzkammer 6 wurden ca. 380 kg und in der Absetzkammer 7 ca. 12 kg Öl abgeschieden. Der Ölgehalt des von der Absetzkammer 7 abfließenden gereinigten Wassers war kleiner als 5 ppm. Im abgeschiedenen Öl konnte kein Restwasser nachgewiesen werden. Mit dem Filtersystem ließ sich somit nicht nur eine weitgehende Reinigung des Wassers erreichen, vielmehr ließ sich auch das emulgierte Öl zurückgewinnen.

### Ausführungsbeispiel 3

Die in Figur 1 dargestellte Anlage ist nicht nur für die Reinigung von Öl-in-Wasser-Emulsionen geeignet, sie läßt sich auch für Wasser-in-Öl-Emulsionen einsetzen. Hierzu weist die Anlage in ihrem Eingangsbereich hinter der Abwasserpumpe 2 einen Bypass 35 zur Zuleitung 3 auf, in den zwischen Absperrhähnen 36, 37 ein Erhitzer 38 für die Wasser-in-Öl-Emulsion eingesetzt ist. Im Erhitzer läßt sich die Wasserin-Öl-Emulsion aufheizen, um die Ölviskosität herabzusetzen. Im Ausführungsbeispiel ist der Erhitzer 38 derart dimensioniert, daß sich die Wasser-in-Öl-Emulsion bis auf ca. 90 - 95°C erwärmen kann. Das emulgierte Wasser läßt sich bei dieser Temperatur in gleicher Weise wie bei einer Öl-in-Wasser-Emulsion behandeln und sich nach Einführen der Emulsion in die Absetzkammer 6 vom Boden der Kammer abziehen. Die weitere Trennung von Öl und Wasser verläuft anschließend in gleicher Weise wie bei der vorbeschriebenen Öl-in-Wasser-Emulsion.

Bei Aufarbeitung von 2 t einer 7 % Wasser enthaltenden Wasser-in-Öl-Emulsion wurde die Emulsion im Erhitzer 38 auf eine Temperatur von 90°C erwärmt. In der Absetzkammer 6 konnten aus dieser Emulsion ca. 1593 kg Öl und in der Absetzkammer 7 noch 7 kg Öl gewonnen werden. Das abgeführte Reinwasser hatte eine restliche Ölkonzentration von kleiner als 5 ppm.

### Ausführungsbeispiel zur Herstellung einer Membran.

Als Stützgerüst wird ein metallisches Netzgewebe mit einer Maschenweite von 40 µm benutzt. Es wird ein Al₂O₃ x 0,5 H₂O-Pulver (Korngröße ca. 2 - 5 µm) aufgebracht, das zuvor mit Binder (Harze) im Mengenverhältnis von 60 Teilen Pulver : 40 Teilen Binder gemischt und mit einem Lösungsmittel auf eine Viskosität von 50 - 60 s nach DIN eingestellt wurde. Als Binder wurde ein Polyethersulfon, als Lösungsmittel N-Methyl- Pyrrolidon verwendet.

Aufgetragen wird auf das Stützgewebe eine insgesamt 60 µm betragende Membranschicht in folgenden drei Schritten: Nacheinander in zwei Schritten werden jeweils eine Schicht von 20 µm aufgebracht und Stützgewebe und Schicht bei ca. 200°C für ca. 3 Min. getrocknet, bevor der Auftrag der nächsten Schicht erfolgt. Im dritten Schritt wird schließlich nach dem Aufbringen der letzten Schicht von 20 µm und ihrer Trocknung ein Tempern der Gesamtschicht angeschlossen. Im Ausführungsbeispiel wurde die Gesamtschicht bei ca. 400°C für ca. 5 Min. getempert.

Die auf diese Weise hergestellte Membran wies hydrophile und demulgierende Eigenschaften auf. Vergleichbare Eigenschaften weisen Membranen auf, bei denen statt Al₂O₃-Pulver ZrO₂- oder Graphitpulver verwendet werden.

## Patentansprüche

1. Membran zur Trennung von Polydispersionen in ihre kontinuierliche und dispergierte Phase sowie Emulsionen in ihre Bestandteile,
**dadurch gekennzeichnet,**
daß als Membran auf einem porösen Stützgerüst als Trägerkörper eine Membranschicht aus gebundenem pulverförmigen Material aufgebracht ist, wobei Pulverkörnung und Binder für die Ausbildung der Schicht derart bestimmt sind, daß die Schicht Durchlaßöffnungen aufweist, durch die die kontinuierliche Phase passieren kann, die gegebene dispergierte und/oder emulgierte Phase jedoch im wesentlichen zurückgehalten wird.

2. Membran nach Anspruch 1,
**dadurch gekennzeichnet**,
daß zur Ausbildung der Membranschicht metallische oder keramische Pulver verwendet werden.

3. Membran nach Anspruch 1 oder 2,
**dadurch gekennzeichnet,**
daß die Membranschicht eine hohe Affinität für die kontinuierliche Phase aufweist.

4. Membran nach einem der Ansprüche 1, 2 oder 3,
**dadurch gekennzeichnet,**
daß zur Erzeugung hydrophiler Membraneigenschaften Keramikpulver und Binder in einem Verhältnis zueinander gemischt werden, bei dem das Keramikpulver zumindest einen Anteil von 55 Gew% aufweist.

5. Membran nach einem der vorhergehenden Ansprüche,
**dadurch gekennzeichnet**,
daß die Membranschicht Pigmente enthält.

6. Membran nach einem der vorhergehenden Ansprüche,
**dadurch gekennzeichnet,**
daß als Stützgerüst ein Metallvlies oder Metallgewebe oder ein Glasfasergewebe mit einer Maschenweite zwischen 5 - 6o µm verwendet wird.

7. Verfahren zur Herstellung einer Membran nach Anspruch 1,
**dadurch gekennzeichnet,**
daß auf einem porösen Stützgerüst eine auf dem Stützgerüst haftende Masse aufgetragen wird, die aus einem körnigen Pulver, einem die Pulverkörner verbindenden Bindemittel (Binder) und einem Lösungsmittel hergestellt ist, und daß die aufgetragene Masse unter Austreiben des Lösungsmittels auf dem Stützgerüst getrocknet und verfestigt wird.

8. Verfahren nach Anspruch 7,
**dadurch gekennzeichnet,**
daß zur Herstellung der auf das Stützgerüst aufzutragenden Masse keramische und/oder metallische Pulvermaterialien mit Korngrößen ≦ 15 µm verwendet werden.

9. Verfahren nach Anspruch 7 oder 8,
**dadurch gekennzeichnet**,
daß als Binder organische Binder (Harze) und für den Binder geeignete Lösungsmittel in solcher Menge verwendet werden, daß für das Auftragen der Masse auf das Stützgerüst geeignete Viskositäten erreicht werden.

10. Verfahren nach einem der Ansprüche 7 bis 9,
**dadurch gekennzeichnet**,
daß die Masse in mehreren Schichten aufgetragen wird, wobei jede der Schichten nach ihrem Auftragen getrocknet und/oder ausgeheizt wird und nach dem Auftragen der letzten Schicht eine Sinterung der Membranschicht erfolgt.

11. Verfahren nach einem der Ansprüche 7 bis 10,
**dadurch gekennzeichnet,**
daß beim Mischen von Pulvermasse und Binder mindestens 30 Gewichtsanteile Binder und 70 Gewichtsanteile Pulvermasse zugegeben werden.

12. Verfahren nach einem der Ansprüche 7 bis 10,
**dadurch gekennzeichnet**,
daß keramisches Pulver mit einem Masseanteil von mindestens 55 Gewichtsanteilen im Pulvermaterial/Binder-Gemisch vermischt werden.

13. Membran nach einem der Ansprüche 1 bis 6,
**gekennzeichnet durch**
ihre Verwendung bei der Reinigung von Abwasser, das Öl enthält, insbesondere als Abwasser bei der Produktion von Olivenöl anfällt.

14. Membran nach Anspruch 13,
**dadurch gekennzeichnet,**
daß eine hydrophile Membranschicht verwendet wird.

15. Membran nach Anspruch 14,
**dadurch gekennzeichnet**,
daß die auf das Stützgerüst aufzutragende Membranschicht keramisches Pulver und organischen Binder aufweist.

16. Membran nach Anspruch 15,
**dadurch gekennzeichnet**,
daß keramisches Pulver mit einer Körnung ≦ 15 µm eingesetzt wird.

17. Membran nach einem der Ansprüche 13 bis 16,
**dadurch gekennzeichnet,**
daß das Pulvermaterial/Binder-Gemisch 55 - 60 Gew.-% keramisches Pulver aufweist.

18. Membran nach einem der Ansprüche 13 bis 17,
**dadurch gekennzeichnet,**
daß die Viskosität der Masse durch Verwenden organischer Lösungsmittel eingestellt wird.

19. Membran nach einem der Ansprüche 13 bis 18,
**dadurch gekennzeichnet**,
daß als Stützgerüst ein Stahlnetz aus rostfreiem Stahl verwendet wird.

20. Membran nach Anspruch 19,
**dadurch gekennzeichnet,**
daß die Masse auf ein Stützgerüst mit einer Maschenweite von 5 - 60 µm aufgetragen wird.

21. Vorrichtung zur Gewinnung restlichen Öls aus Abwasser, insbesondere von Abwasser, das bei der Olivenölproduktion entsteht, mit einer im Abwasserablauf angeordneten Filterkammer, der das Abwasser zum Filterkörper primärseitig zuläuft und von dessen Sekundärseite entöltes Wasser abgezogen wird,
**dadurch gekennzeichnet,**
daß als Filterkörper eine Membran (15) verwendet wird, die eine auf einem Stützgerüst aufgebrachte Membranschicht aus gebundenem pulverförmigem Material aufweist, wobei zur Ausbildung der Membranschicht Pulverkörner und Binder derart gewählt sind, daß in der Schicht Durchlaßöffnungen für die wäßrige Phase entstehen und das emulgierte Öl zurückgehalten wird.

22. Vorrichtung nach Anspruch 21,
**dadurch gekennzeichnet**,
daß mehrere Membranen (15) parallel angeordnet sind, wobei alle Permeatabläufe in einer Permeatleitung (28) zusammengeführt sind.

23. Vorrichtung nach einem der Ansprüche 20 bis 22,
**dadurch gekennzeichnet,**
daß die Permeatleitung (28) in eine Absetzkammer (7) zum Abtrennen von restlichem Öl aus dem Permeat mündet.

24. Vorrichtung nach einem der Ansrpcüeh 20 bis 23,
**dadurch gekennzeichnet**,
daß der Filterkammer (8) eine Absetzkammer (7) zur Abtrennung von im Abwasser enthaltenem demulgiertem Öl vorgeschaltet ist.

25. Vorrichtung nach Anspruch 24,
**dadurch gekennzeichnet,**
daß von der Filterkammer (8) abgezogenes Retentat zur der Filterkammer (9) vorgeschalteten Absetzkammer (7) zugeführt wird.

26. Vorrichtung nach Anspruch 24 oder 25,
**dadurch gekennzeichnet,**
daß zur Aufheizung des Abwassers vor der Absetzkammer (7) ein Erhitzer (38) vorgesehen ist.
